# EUROPEAN PATENT APPLICATION

(11) **EP 4 757 031 A1**
(43) Date of publication of application: **10.06.2026**
(21) Application number: 24921345.5
(22) Date of filing: 01.08.2024
(51) Int. Cl.: H01M 50/242

(54) **BATTERY AND ELECTRICAL DEVICE**

(30) Priority: 01.02.2024 CN 202420254586 U
(71) Applicant: Contemporary Amperex Technology Co., Limited, Ningde, Fujian 352100 (CN)
(72) Inventor: ZHANG, Haidong, Ningde, Fujian 352100 (CN); QIN, Feng, Ningde, Fujian 352100 (CN); FANG, Zhengyu, Ningde, Fujian 352100 (CN)
(74) Representative: Kraus & Lederer PartGmbB
(86) International application number: PCT/CN2024/109145
(87) International publication number: WO 2025/161313

(57) **Abstract**

A battery (200) and an electrical device (100), which apply to the technical field of traction batteries. The battery comprises: a housing (300), which is configured to accommodate battery cells (30); at least two fixing beams (71), wherein the at least two fixing beams are spaced apart in the housing, a space for accommodating the battery cells being formed between every two adjacent fixing beams; fixing seats (72) arranged on the fixing beams; and limiting members (73) which are connected to the fixing seats on different fixing beams. Connecting the limiting members to different fixing beams enables deformation of the fixing beams to be suppressed by means of the limiting members, thus enhancing the strength of the fixing beams, and reducing a degree of deformation of the fixing beams along with the expansion of the battery cells. By means of the provision of the fixing seats, the strength at the joints between the limiting members and the fixing beams is enhanced to reduce failures such as breakage at the joints between the limiting members and the fixing beams; thus, the strength of the fixing beams is further enhanced, thereby better suppressing the expansion of the battery cells, improving the performance of the battery, and reducing potential safety hazards.

## Description

The present application claims priority to Chinese Patent Application No. 202420254586.3, filed with the China National Intellectual Property Administration on February 01, 2024, and entitled "BATTERY AND ELECTRICAL DEVICE", which is incorporated herein by reference in its entirety.

### TECHNICAL FIELD

The present application relates to the technical field of traction batteries, and in particular, to a battery and an electrical device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

However, a battery is prone to generate a large expansion force during charging and discharging, and the expansion force will act on a beam structure of a housing of a battery and cause deformation of the housing. If the deformation of the housing cannot be well suppressed, on the one hand, the beam structure is easily broken, and on the other hand, cracking of a casing body of a battery cell, breakage of a connecting aluminum busbar, and other problems are also easily caused, which in turn leads to the failure of the battery function and even safety problems.

### SUMMARY

In view of the above problems, the present application provides a battery and an electrical device, which can alleviate a problem of deformation of a housing.

In a first aspect, an embodiment of the present application provides a battery, comprising:
a housing, which is configured to accommodate a battery cell;
at least two fixing beams, wherein the at least two fixing beams are spaced apart in the housing, a space for accommodating the battery cell being formed between two adjacent fixing beams;
a fixing seat arranged on the fixing beam; and
a limiting member, which is connected to the fixing seats on different fixing beams.

In the technical solution of the embodiment, providing the fixing beam in the housing enables the battery cell to be placed between two adjacent fixing beams, and enables expansion of the battery cell to be suppressed by means of the fixing beam, thereby reducing potential safety hazards that may be caused by the expansion of the battery cell. Connecting the limiting member to different fixing beams enables deformation of the fixing beam to be suppressed by means of the limiting member, thereby enhancing the strength of the fixing beam, and reducing a degree of deformation of the fixing beam along with the expansion of the battery cell. By means of the provision of the fixing seat, the strength at the joint between the limiting member and the fixing beam is enhanced to reduce failures such as breakage at the joint between the limiting member and the fixing beam; thus, the strength of the fixing beam is further enhanced, thereby better suppressing the expansion of the battery cell, improving the performance of the battery, and reducing potential safety hazards.

In some embodiments, an accommodating groove can be formed between any two fixing beams, the battery cell is located in the accommodating groove, and the fixing seat is arranged on one side of the fixing beam facing away from the accommodating groove.

Since a force received on the fixing seat mainly comes from the expansion of the battery cell, and a force formed by the expansion of the battery cell points from the accommodating groove to the outside of the accommodating groove, in the technical solution of the embodiment, arranging the fixing seat on one side of the fixing beam facing away from the accommodating groove enables the force formed by the expansion of the battery cell to be partially applied to the fixing seat and transmitted to the limiting member through the fixing seat, so as to reduce force concentration at the connection between the fixing seat and the fixing beam, thereby reducing the connection failure between the fixing seat and the fixing beam, enabling a force received on the fixing beam to be more easily transmitted to the fixing seat and the limiting member, and further enhancing the strength of the fixing beam.

In some embodiments, the fixing beam is provided with a fixing groove, the fixing seat is housed in the fixing groove, and an outer wall of the fixing seat abuts against an inner wall of the fixing groove.

The technical solution of the embodiment further provides some ways of connecting the fixing seat to the fixing beam. Providing the fixing groove on the fixing beam, and housing the fixing seat in the fixing groove enable the inside of the fixing groove to be connected to the fixing seat from multiple directions, so as to increase the contact area between the fixing seat and the fixing beam, so that the force can be more uniformly transmitted to the fixing seat, the situation that the force received at the connection between the fixing seat and the fixing beam is concentrated at a certain point is reduced, and thus the connection strength between the fixing seat and the fixing beam is increased.

In some embodiments, in a height direction of the fixing beam, the size of the fixing groove is less than the size of the fixing beam.

In the technical solution of the embodiment, allowing the size of the fixing groove in the height direction of the fixing beam to be less than the size of the fixing beam also enables the size of the fixing seat in the height direction of the fixing beam to be less than the size of the fixing beam. Since a force applied by the limiting member to the fixing seat points from the outside to a direction in which the accommodating groove is located when the fixing beam is subjected to the expansion force of the battery, and the limiting member is connected to one end of the fixing seat, a lever force pointing from the inside of the accommodating groove to the outside is easily formed at one end of the fixing seat away from the limiting member, and the connection stability between the fixing seat and the fixing beam is negatively affected. Also enabling the size of the fixing seat in the height direction of the fixing beam to be less than the size of the fixing beam can reduce the negative influence of the lever force on the connection stability between the fixing seat and the fixing beam, thereby enhancing the connection strength between the fixing seat and the fixing beam.

In some embodiments, in a thickness direction of the fixing beam, the width of the fixing groove gradually increases, and the width of the fixing seat also gradually increases.

In the technical solution of the embodiment, setting the fixing groove in a shape that gradually expands in a direction away from the accommodating groove, and gradually increasing the width of the fixing seat enable the shape of the fixing seat to adapt to the shape of the fixing groove. This setting can further increase the contact area between the fixing seat and the fixing beam, thereby further increasing the strength at the connection between the fixing seat and the fixing beam. Meanwhile, this setting also enables both the inner side wall of the fixing groove and the outer side wall of the fixing seat to be inclined relative to the direction of the expansion force. Since the fixing beam will have a trend to deform in the direction away from the accommodating groove when subjected to the expansion force of the battery cell, this setting enables the expansion force received at the connection between the fixing seat and the fixing beam to form a component force perpendicular to the inner side wall of the fixing groove as a tensile force and also form a component force along the inner side wall of the fixing groove as a shear force so as to reduce the occurrence of easy breakage at the connection between the fixing seat and the fixing groove caused by only a single force, and also enables the force received at the connection between the fixing seat and the fixing groove to be dispersed and transmitted to the fixing beam so as to further increase the strength at the connection between the fixing seat and the fixing beam.

In some embodiments, the fixing seat is in a shape of a triangular prism, a trapezoidal quadrangular prism, or a semi-cylinder.

The technical solution of the embodiment further provides some specific structures of the fixing seat to increase the contact area between the fixing seat and the fixing beam, thereby further increasing the strength at the connection between the fixing seat and the fixing beam. At the same time, the force received at the connection between the fixing seat and the fixing beam can also be better dispersed and transmitted to the inside of the fixing beam, thereby further increasing the strength at the connection between the fixing seat and the fixing beam.

In some embodiments, the fixing seat is provided with a weight-reducing groove.

In the technical solution of the embodiment, providing the weight-reducing groove on the fixing seat can reduce the weight of the fixing seat, thereby reducing the negative influence of the setting of the fixing seat on the overall weight of the housing.

In some embodiments, at least two fixing seats are spaced apart on the fixing beam in a length direction of the fixing beam.

In the technical solution of the embodiment, providing a plurality of fixing seats on the fixing beam enables the fixing seat and the limiting member to better transmit the expansion force of the battery cell received by the fixing beam, thereby better achieving the effect of suppressing the deformation of the fixing beam.

In some embodiments, the fixing seat is made of the same material as the fixing beam.

In the technical solution of the embodiment, allowing the fixing seat to be made of the same material as the fixing beam enables the expansion force of the battery cell to be more uniformly distributed between the fixing seat and the fixing beam, thereby reducing the occurrence of the fixing seat or the fixing beam breaking and failing first.

In some embodiments, the limiting member is detachably connected to a corresponding fixing seat.

In the technical solution of the embodiment, detachably connecting the limiting member to the fixing seat facilitates the installation, disassembly, and replacement of the limiting member, and also facilitates the application of a pre-tightening force on the limiting member in advance, so that the limiting member can better suppress the deformation of the fixing beam through the pre-tightening force.

In some embodiments, the housing further comprises a first housing; and at least one fixing beam constitutes a frame of the first housing, or each fixing beam is located inside the first housing.

The technical solution of the embodiment provides some setting methods of the fixing beam. Allowing the fixing beam to be a structural member inside the housing also enables the fixing beam to play a role of increasing the strength of the housing. At the same time, further allowing the fixing beam to be used as the frame of the housing reduces the occupation of an internal space of the housing by the fixing beam.

In some embodiments, the battery further comprises a battery cell which is disposed between two adjacent fixing beams;
a side surface of the battery cell comprises two first surfaces that are oppositely disposed and two second surfaces that are oppositely disposed, the first surface is adjacent to the second surface, and the area of the first surface is greater than the area of the second surface; and the first surface faces the fixing beam.

In the technical solution of the embodiment, the first surface of the battery cell with a larger area is allowed to be opposite to the fixing beam. Since a degree of deformation of the first surface with a larger area is usually larger, allowing the first surface to be opposite to the fixing beam can better suppress the expansion of the battery cell by means of the fixing beam.

In some embodiments, the battery cell further comprises a pressure relief mechanism, and the limiting member and the pressure relief mechanism are alternately disposed.

In the technical solution of the embodiment, allowing the limiting member and the pressure relief mechanism of the battery cell to be alternately disposed reduces the occurrence of the limiting member covering the pressure relief mechanism and hindering the exhaust of the pressure relief mechanism, thereby reducing the negative influence of the limiting member on the exhaust of the battery cell.

In a second aspect, some embodiments of the present application further provide an electrical device, comprising the battery provided according to some embodiments in the first aspect.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

To describe technical solutions in embodiments of the present application more clearly, the following briefly describes the accompanying drawings for describing the embodiments or the conventional technology. It is clear that the accompanying drawings described in the following are merely some embodiments of the present application. Those of ordinary skill in the art can still derive other accompanying drawings from these accompanying drawings without creative efforts.
FIG. 1 is a schematic structural diagram of an electrical device provided according to some embodiment of the present application;
FIG. 2 is a schematic diagram of an exploded structure of a battery provided according to some embodiments of the present application;
FIG. 3 is a schematic diagram of an exploded structure of a battery cell provided according to some embodiments of the present application;
FIG. 4 is a schematic perspective diagram of a first housing of a housing provided according to some embodiments of the present application;
FIG. 5 is a partially enlarged schematic diagram of A in FIG. 4;
FIG. 6 is a schematic diagram of an exploded structure of a fixing beam and a fixing seat in FIG. 5;
FIG. 7 is a schematic top view of the battery after a second housing is removed provided according to some embodiments of the present application; and
FIG. 8 is a partially enlarged schematic diagram of B in FIG. 7.

### Symbols in the figures have the following meanings:

100: electrical device;
10: motor;
20: controller;
200: battery;
30: battery cell; 301: first surface, 302: second surface; 31: end cap; 32: electrode assembly; 33: casing body; 34: pressure relief mechanism;
300: housing;
70: first housing; 71: fixing beam; 711: fixing groove; 72: fixing seat; 721: threaded hole; 722: weight-reducing groove; 73: limiting member; 74: accommodating groove;
80: second housing.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a nonexclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an internal communication between two elements or interaction between two elements. A person of ordinary skill in the art may understand the specific meanings of the above terms in the embodiments of the present application according to specific situations.

At present, in view of the development of the market, the use of traction batteries is becoming increasingly more widespread. Traction batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of traction batteries continues to expand, a market demand for traction batteries continues to increase.

A battery cell is prone to generate a large expansion force during charging and discharging, and the expansion force will act on a beam structure of a battery housing and cause deformation of the housing. If the deformation of the housing cannot be well suppressed, on the one hand, the beam structure is easily broken, and on the other hand, cracking of a casing body of the battery cell, breakage of a busbar component, and other problems are also easily caused, which in turn leads to the failure of the battery function and even safety problems.

In order to alleviate the problem of the deformation of the housing caused by the expansion of the battery cell, an annular steel strip wrapped around the battery cell is usually provided in the housing at present. Specifically, the steel strip is wrapped around a plurality of battery cells in the housing, and the expansion of the battery cell is suppressed by the steel strip. Although such an arrangement can suppress the expansion of the battery cell, it is necessary to wrap the steel strip around the battery cell and form a battery module before the battery cell is placed in the housing, which makes the process of placing the battery cell in the housing complicated and negatively affects the production efficiency. However, if the annular steel strip is assembled after the battery cell is placed in the housing, the assembly difficulty will increase, and there is no relevant space in some models of battery housings for the assembly of the annular steel strip.

At present, there are also some batteries in which the steel strip is directly fixed on the beam structure of the housing by rivets, bolts, and other structures, and the deformation of the beam structure is limited by the steel strip. However, since the beam structure is mostly hollow, the strength of such structure at the connection between the steel strip and the beam structure is usually low, that is, rivets, bolts, and other structures are prone to come off. If the thickness of the beam structure is increased or the beam structure is set as a solid structure, it will lead to a significant increase in the weight of the housing and an increase in cost.

Based on the above considerations, in order to increase the strength of the housing to reduce the negative influence of the expansion of the battery cell on the housing, the embodiment of the present application provides a battery housing, in which a limiting member is connected to different fixing beams, and a fixing seat is provided at the joint between the limiting member and the fixing beam, that is, the fixing seat is provided on the fixing beam, and one end of the limiting member is disposed on the fixing seat.

In such a housing, since the battery cell is located between two adjacent fixing beams, the expansion of the battery cell will cause the fixing beam to deform in a direction away from the battery cell, that is, the deformation directions of the fixing beams on two sides of the battery cell are opposite. Connecting the limiting member to different fixing beams allows the directions of the expansion forces received at two ends of the limiting member to be opposite, so as to limit the deformation of the fixing beam by using the expansion force of the battery cell itself and the structural strength of the limiting member. At the same time, the limiting member can connect various fixing beams into an integral system, at which point the force received by the fixing beam can be transmitted to the entire system, thereby reducing the occurrence of local deformation of the fixing beam, achieving the effects of suppressing the deformation of the fixing beam and enhancing the strength of the fixing beam, and further reducing the deformation of the housing.

The limiting member is connected to the fixing beam by means of the fixing seat, which can reduce failures such as breakage at the joint between the limiting member and the fixing beam, and can further enhance the strength of the fixing beam, thereby better suppressing the expansion of the battery cell, improving the performance of the battery, and reducing potential safety hazards.

The housing disclosed in the embodiment of the present application can be configured to accommodate the battery cell, and the battery cell can be applied to an electrical device using a power supply or various energy storage systems using a battery as an energy storage element. The electrical device can be, but is not limited to, a mobile phone, a tablet computer, a notebook computer, an electric toy, an electric tool, a battery-powered vehicle, an electric vehicle, a ship, a spacecraft, and the like. The electric toy may comprise a stationary or mobile electric toy, such as a game machine, an electric car toy, an electric ship toy, an electric airplane toy, and the like, and the spacecraft may comprise an airplane, a rocket, a space shuttle, a spaceship, etc.

For ease of description, the following embodiments are described by taking, as an example, an electrical device 100, as a vehicle, in an embodiment of the present application.

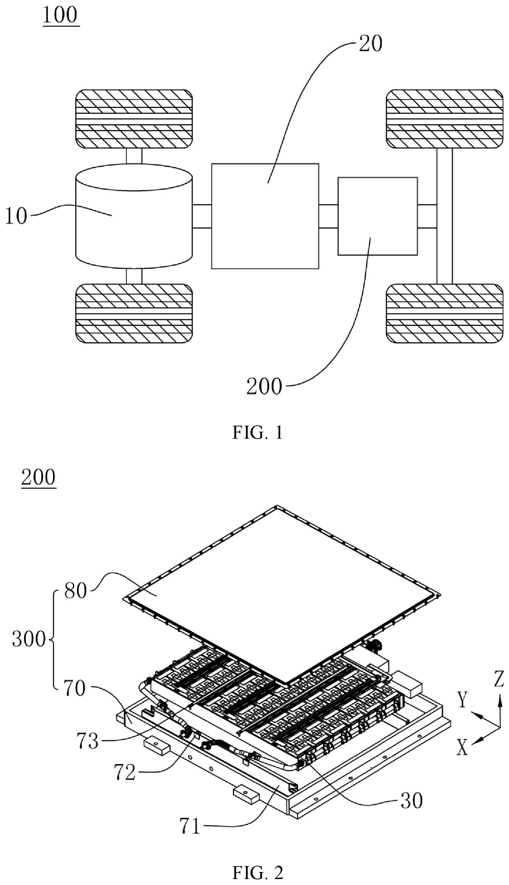

Referring to FIG. 1, FIG. 1 is a schematic structural diagram of a vehicle provided according to some embodiments of the present application. The vehicle may be a fuel vehicle, a gas vehicle, or a new energy vehicle, and the new energy vehicle may be a battery electric vehicle, a hybrid vehicle, or a range-extended electric vehicle. Inside the vehicle, a battery 200 is provided, which may be provided at the bottom, head, or tail of the vehicle. The battery 200 may be configured to power the vehicle, for example, the battery 200 may be used as an operating power source of the vehicle. The vehicle may further comprise a controller 20 and a motor 10, where the controller 20 is configured to control the battery 200 to power the motor 10, for example, for a working power requirement of the vehicle during starting, navigating, and driving.

In some embodiments of the present application, the battery 200 may be used not only as an operating power source for the vehicle, but also as a driving power source for the vehicle, instead of or partially instead of fuel or natural gas to provide driving power for the vehicle.

Referring to FIG. 2, FIG.2 is an exploded diagram of the battery 200 provided according to some embodiments of the present application. The battery 200 comprises a housing 300 and a battery cell 30. The battery cell 30 is accommodated in the housing 300. Here, the housing 300 is configured to provide an accommodating space for the battery cell 30, and the housing 300 may adopt multiple structures. In some embodiments, the housing 300 may comprise a first housing 70 and a second housing 80, the first housing 70 and the second housing 80 cover each other, and the first housing 70 and the second housing 80 jointly define the accommodating space for accommodating the battery cell 30. The second housing 80 may be a hollow structure with an opening at one end, the first housing 70 may be a plate-shaped structure, and the first housing 70 covers an opening side of the second housing 80, so that the first housing 70 and the second housing 80 jointly define the accommodating space. Alternatively, the first housing 70 and the second housing 80 each may be a hollow structure with an opening at one end, and an opening side of the first housing 70 covers an opening side of the second housing 80. Certainly, the housing 300 formed by the first housing 70 and the second housing 80 may be in various shapes such as cylinder, cuboid, etc.

In the battery 200, a plurality of battery cells 30 may be provided, and the plurality of battery cells 30 may be subjected to series connection, parallel connection, or series-parallel connection. The series-parallel connection means that the plurality of battery cells 30 are subjected to both series connection and parallel connection. The plurality of battery cells 30 may be directly connected in series, in parallel, or in a combination of both, and the whole of the plurality of battery cells 30 is accommodated in the housing 300. Certainly, the battery 200 may be alternatively a battery 200 module formed by connecting the plurality of battery cells 30 in series, in parallel, or in a combination of both, and then a plurality of battery 200 modules are integrated by series connection, parallel connection, or series-parallel connection, and accommodated in the housing 300. The battery 200 may further comprise other structures. For example, the battery 200 may further comprise a busbar component for implementing an electrical connection between the plurality of battery cells 30.

Here, each battery cell 30 may be a secondary battery or a primary battery, or may be a lithium-sulfur battery, a sodium-ion battery, or a magnesium-ion battery, but is not limited thereto. The battery cell 30 may be in a shape of a cylinder, a flat body, a cuboid, or in other shapes.

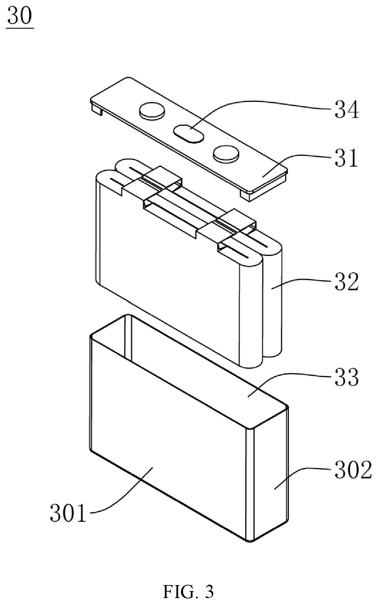

Referring to FIG. 3, FIG. 3 is a schematic diagram of an exploded structure of the battery cell 30 provided according to some embodiments of the present application. The battery cell 30 refers to a minimum unit constituting the battery 200. As shown in the figure, the battery cell 30 comprises an end cap 31, a casing body 33, an electrode assembly 32, and other functional components.

The end cap 31 is a component that covers the opening of the casing body 33 to isolate the internal environment of the battery cell 30 from the external environment. Without limitation, the shape of the end cap 31 may adapt to the shape of the casing body 33 to fit the casing body 33. Optionally, the end cap 31 may be made of a material with certain hardness and strength (e.g., aluminum alloy). As such, the end cap 31 is less prone to deformation under compressive impact, thereby enabling the battery cell 30 to have higher structural strength and improved safety performance. The end cap 31 may be provided with a functional component such as an electrode terminal. The electrode terminal may be used to be electrically connected to the electrode assembly 32 for outputting or inputting electric energy of the battery cell 30. In some embodiments, a pressure relief mechanism 34 for relieving an internal pressure may be further disposed on the end cap 31 when the internal pressure or temperature of the battery cell 30 reaches a threshold. The end cap 31 may be made of various materials, such as copper, iron, aluminum, stainless steel, aluminum alloy, plastic, etc. The embodiments of the present application impose no special limitations thereto. In some embodiments, an insulation member may be further provided on an inner side of the end cap 31, and the insulation member may be used to isolate an electrical connection component in the casing body 33 from the end cap 31 to reduce the risk of a short circuit. For example, the insulation member may be plastic, rubber, etc.

The casing body 33 is an assembly for cooperating with the end cap 31 to form the internal environment of the battery cell 30, where the formed internal environment may be used to accommodate the electrode assembly 32, an electrolyte solution, and other components. The casing body 33 and the end cap 31 may be separate components, and an opening may be provided in the casing body 33, and the inner environment of the battery cell 30 may be formed by closing the end cap 31 at the opening. Without limitation, the end cap 31 and the casing body 33 may also be integrated. Specifically, the end cap 31 and the casing body 33 may form a joint connection surface before other components are fitted into the casing, and then the end cap 31 is enabled to cover the casing body 33 when an interior of the casing body 33 needs to be encapsulated. The casing body 33 may be in various shapes and various dimensions, such as a cuboid, a cylinder, a hexagonal prism, and the like. Specifically, the shape of the casing body 33 may be determined according to a specific shape and dimension of the electrode assembly 32. The casing body 33 may be made of various materials, such as copper, iron, aluminum, stainless steel, aluminum alloy, plastic, and the like. This is not specially limited in the embodiments of the present application.

The electrode assembly 32 is a component in the battery cell 30 in which an electrochemical reaction occurs. The casing body 33 may comprise one or more electrode assemblies 32. The electrode assembly 32 is mainly formed by winding or stacking a positive electrode sheet and a negative electrode sheet, and a separator is generally provided between the positive electrode sheet and the negative electrode sheet. Parts of the positive electrode sheet and the negative electrode sheet with an active substance constitute a main body portion of the electrode assembly 32, and parts of the positive electrode sheet and the negative electrode sheet with no active substance each constitute a tab. A positive tab and a negative tab may both be located at one end of the main body portion or be located at two ends of the main body portion respectively. During charging and discharging of the battery 200, a positive electrode active substance and a negative electrode active substance react with the electrolyte solution, and the tab is connected to the electrode terminal to form a current circuit.

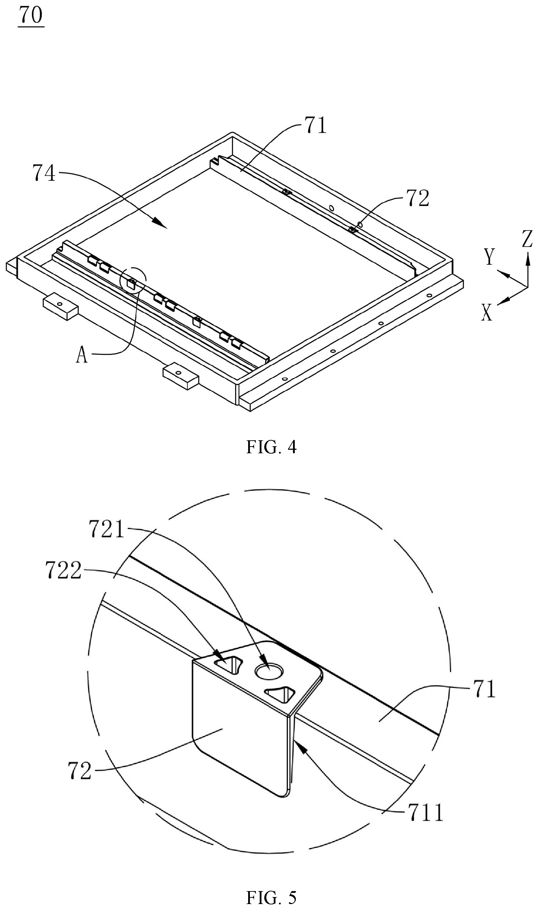

In a first aspect, some embodiments of the present application provide a battery 200. Referring to FIGS. 2 and 4, FIG. 2 is a schematic diagram of an exploded structure of the battery 200 provided according to some embodiments of the present application, and FIG. 4 is a schematic perspective view of the first housing 70 of the housing 300 provided according to some embodiments of the present application.

In FIG. 4, a direction in which an X axis is located is a length direction of the housing 300, a direction in which a Y axis is located is a width direction of the housing 300, and a direction in which a Z axis is located is a height direction of the housing 300.

In some embodiments of the present application, the battery 200 comprises a housing 300 which is configured to accommodate the battery cell 30. The housing 300 comprises a fixing beam 71, a fixing seat 72, and a limiting member 73, specifically, the housing 300 comprises at least two fixing beams 71 spaced apart in the housing 300, and a space for accommodating the battery cell 30 is formed between two adjacent fixing beams 71. The fixing seat 72 is arranged on the fixing beam 71. The limiting member 73 is connected to the fixing seats 72 on different fixing beams 71.

The fixing beam 71 refers to a structure formed in the housing 300, and the fixing beam 71 may be provided on the first housing 70 or may be provided on the second housing 80. The main function of the fixing beam 71 is to provide strength for the housing 300, and at the same time, the fixing beam 71 can also limit the position of the battery cell 30 to assist in fixing the battery cell 30. The fixing beam 71 may be in a shape of a cuboid, a cylinder, or in other shapes. The fixing beam 71 may be made of metal, plastic, or other materials. The fixing beam 71 may be welded to the housing 300, or may be disposed on the housing 300 in other manners such as snap connection, bolt connection, or adhesive connection.

Since the main function of the fixing beam 71 is to increase the strength of the housing 300, and the provision of the fixing beam 71 should not affect the arrangement of the battery cell 30 in the housing 300, there should be at least two fixing beams 71, at which point two fixing beams 71 may be provided on opposite sides of the battery cell 30 to reduce the negative influence of the fixing beam 71 on the installation and arrangement of the battery cell 30. At the same time, the fixing beam 71 is also enabled to abut against the battery cell 30 to assist in fixing the battery cell 30. The at least two fixing beams 71 can also better enhance the strength of the housing 300.

The fixing seat 72 refers to a structure in the housing 300 that provides a fixing basis for the limiting member 73, and the fixing seat 72 is also used as a transfer structure between the limiting member 73 and the fixing beam 71. The fixing seat 72 may be in a block shape, a sheet shape or other shapes, and the fixing seat 72 may be in a rectangular shape, a pyramid shape or other shapes. The fixing seat 72 may be made of the same material as the fixing beam 71, or may be made of a material different from the fixing beam 71, for example, the fixing seat 71 may be made of metal, plastic, or other materials. The fixing seat 72 may be welded to the fixing beam 71, or may be disposed on the fixing beam 71 in a manner such as snap connection, adhesive connection, or bolt connection.

The limiting member 73 refers to a structure in the housing that connects different fixing beams 71. Two ends of the limiting member 73 are respectively connected to different fixing beams 71 to limit the deformation of the fixing beam 71 and enhance the strength of the fixing beam 71. The limiting member 73 may be in a strip shape, a sheet shape (for example, a metal sheet structure), a block shape (for example, a flat beam structure), or other shapes. The limiting member 73 may be made of metal, plastic, or other materials. The limiting member 73 may be connected to the fixing seat 72 by means of bolt connection, or may be connected to the fixing seat 72 by welding, snap connection, or other methods.

Since the fixing seat 72 is connected to the fixing beam 71, an expansion force of the battery cell 30 received by the fixing beam 71 can be transmitted to the limiting member 73 through the fixing seat 72 and transmitted to the other fixing beam 71 through the limiting member 73, so as to suppress force-induced deformation or deformation trend of the fixing beam 71, thereby improving the strength of the fixing beam 71.

Since the battery cell 30 is located between two adjacent fixing beams 71, the expansion of the battery cell 30 will cause the fixing beam 71 to deform in a direction away from the battery cell 30, that is, the deformation directions of the fixing beams 71 on two side of the battery cell 30 are opposite. Connecting the limiting member 73 to different fixing beams 71 allows the directions of the expansion forces received at two ends of the limiting member 73 to be opposite, so as to limit the deformation of the fixing beam 71 by using the expansion force of the battery cell 30 itself. At the same time, the limiting member 73 can connect various fixing beams 71 into an integral system, at which point the force received by the fixing beam 71 can be transmitted to the entire system, thereby reducing the occurrence of local deformation of the fixing beam 71, achieving the effects of suppressing the deformation of the fixing beam 71 and enhancing the strength of the fixing beam 71, and further reducing the deformation of the housing 300.

The limiting member 73 is connected to the fixing beam 71 by means of the fixing seat 72, which can reduce failures such as breakage at the joint between the limiting member 73 and the fixing beam 71, and can further enhance the strength of the fixing beam 71, thereby better suppressing the expansion of the battery cell 30, improving the performance of the battery 200, and reducing potential safety hazards.

In the embodiment, the fixing beam 71 is disposed in the housing 300, so that the battery cell 30 can be placed between two adjacent fixing beams 71, and the expansion of the battery cell 30 is suppressed by means of the fixing beam 71, thereby reducing potential safety hazards which may be caused by the expansion of the battery cell 30. Connecting the limiting member 73 to different fixing beams 71 enables deformation of the fixing beam 71 to be suppressed by means of the limiting member 73, thereby enhancing the strength of the fixing beam 71, and reducing a degree of deformation of the fixing beam 71 along with the expansion of the battery cell 30. By means of the provision of the fixing seat 72, the strength at the joint between the limiting member 73 and the fixing beam 71 is enhanced to reduce failures such as breakage at the joint between the limiting member 73 and the fixing beam 71; thus, the strength of the fixing beam 71 is further enhanced, thereby better suppressing the expansion of the battery cell 30, improving the performance of the battery 200, and reducing potential safety hazards.

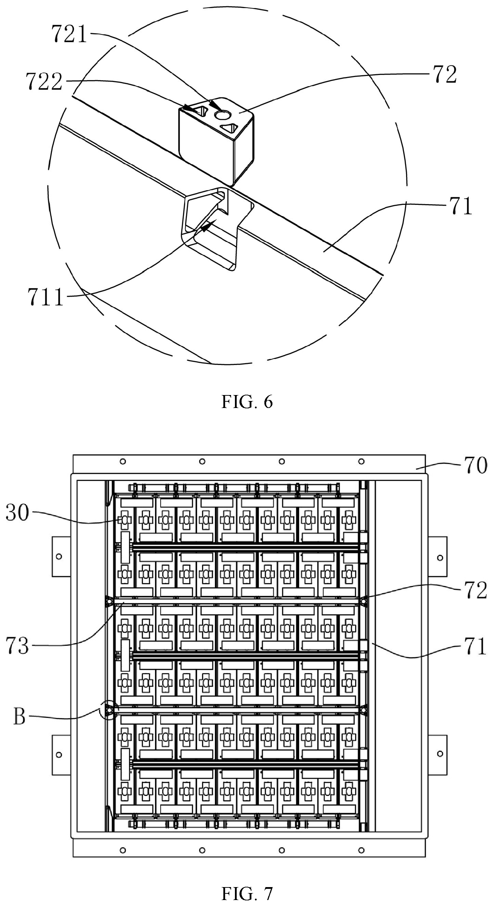

According to some embodiments of the present application, referring to FIGS. 4, 5, and 6, FIG. 4 is a schematic perspective diagram of the first housing 70 of the housing 300 provided according to some embodiments of the present application, FIG. 5 is a partially enlarged schematic diagram of A in FIG. 4, and FIG. 6 is a schematic diagram of an exploded structure of the fixing beam 71 and the fixing seat 72 in FIG. 5.

In FIG. 4, a direction in which an X axis is located is a length direction of the housing 300, a direction in which a Y axis is located is a width direction of the housing 300, and a direction in which a Z axis is located is a height direction of the housing 300.

In some embodiments of the present application, an accommodating groove 74 can be formed between any two fixing beams 71, the battery cell 30 is located in the accommodating groove 74, and the fixing seat 72 is disposed on one side of the fixing beam 71 facing away from the accommodating groove 74.

The accommodating groove 74 refers to a structure formed between two adjacent fixing beams 71. The accommodating groove 74 is used to provide a space for the placement and arrangement of the battery cell 30. The accommodating groove 74 may be enclosed by two fixing beams 71 in cooperation with side and bottom walls of the housing 300, or may be enclosed by two fixing beams 71 in cooperation with the bottom wall of the housing 300, or may be defined and formed by only two fixing beams 71. The accommodating groove 74 may be in a shape of a cuboid, a cylinder, or in other shapes.

Since two, three, or more fixing beams 71 may provided, the accommodating groove 74 may be formed between any two fixing beams 71. In some embodiments, two fixing beams 71 are provided, at which point the accommodating groove 74 is formed between the two fixing beams 71, and the fixing seat 72 is disposed on one side of the fixing beam 71 facing away from the accommodating groove 74. In some other embodiments, three fixing beams 71 are provided, and the accommodating groove 74 is formed only between two fixing beams 71 at two ends, that is, the fixing beam 71 in the middle of the three fixing beams 71 is only used to enhance the structural strength of the housing 300, and is not used to fix the fixing seat 72 and the limiting member 73, at which point the fixing seat 72 is disposed on one side of the fixing beam 71 facing away from the accommodating groove 74. In still other embodiments, three fixing beams 71 are provided, and the accommodating groove 74 is formed between two adjacent fixing beams 71, at which point the fixing seats 72 are provided on both sides of the fixing beam 71 in the middle of the three fixing beams 71, and the fixing beam 71 in the middle is mainly used to provide a fixing basis for the fixing seats 72 and is not easy to deform with an expansion force. The limiting member 73 is connected to two fixing seats 72 on one side of the fixing beam 71 facing away from a corresponding accommodating groove 74 across one accommodating groove 74. It can be understood that the number and arrangement of the fixing beams 71 and the setting of the fixing seat 72 may also be in other ways, and are not limited to the above ways.

Since the limiting member 73 is configured to suppress the deformation of the fixing beam 71, and the fixing seat 72 is used to provide a fixing basis for the limiting member 73, when the fixing beam 71 is subjected to the expansion force of the battery cell 30, the force direction thereof is from the accommodating groove 74 to a direction facing away from the accommodating groove 74, that is, from the accommodating groove 74 to the outside of the accommodating groove 74 in the X-axis direction in the figure, and the force direction of the fixing seat 72 and the limiting member 73 is the same as the force direction of the fixing beam 71. Accordingly, in the embodiment, arranging the fixing seat 72 on one side of the battery cell 30 facing away from the accommodating groove 74 enables the force formed by the expansion of the battery cell 30 to be partially applied to the fixing seat 72 and transmitted to the limiting member 73 through the fixing seat 72, so as to reduce force concentration at the connection between the fixing seat 72 and the fixing beam 71, thereby reducing the connection failure between the fixing seat 72 and the fixing beam 71, enabling the force received by the fixing beam 71 to be more easily transmitted to the fixing seat 72 and the limiting member 73, and further enhancing the strength of the fixing beam 71.

According to some embodiments of the present application, referring to FIGS. 4, 5, and 6, FIG. 4 is a schematic perspective diagram of the first housing 70 of the housing 300 provided according to some embodiments of the present application, FIG. 5 is a partially enlarged schematic diagram of A in FIG. 4, and FIG. 6 is a schematic diagram of an exploded structure of the fixing beam 71 and the fixing seat 72 in FIG. 5.

In FIG. 4, a direction in which an X axis is located is a length direction of the housing 300, a direction in which a Y axis is located is a width direction of the housing 300, and a direction in which a Z axis is located is a height direction of the housing 300.

In some embodiments of the present application, the fixing beam 71 is provided with a fixing groove 711. The fixing seat 72 is housed in the fixing groove 711, and an outer wall of the fixing seat 72 abuts against an inner wall of the fixing groove 711.

The fixing groove 711 refers to a groove structure provided on the fixing beam 71, and the fixing groove 711 is used to accommodate the fixing seat 72. The fixing groove 711 may be a rectangular groove, a trapezoidal groove, or a groove of other shapes. The fixing groove 711 may be provided on any side of the fixing beam 71. For example, the fixing groove 711 is provided on one side of the fixing beam 71 facing away from a bottom surface of the housing 300, and for another example, the fixing groove 711 is provided on one side of the fixing beam 71 facing away from the accommodating groove 74.

The fixing seat 72 is housed in the fixing groove 711, and an outer wall of the fixing seat 72 abuts against an inner wall of the fixing groove 711, that is, a side wall of the fixing groove 711 can be connected to the fixing seat 72 from a plurality of different directions. When the fixing beam 71 is subjected to the expansion force of the battery cell 30, the fixing beam 71 has a trend to deform in a direction away from the accommodating groove 74, at which point the force received by the fixing seat 72 can be dispersed to different directions of the fixing beam 71 through the fixing seat 72 and the inner wall of the fixing groove 711 to reduce force concentration, thereby reducing the force received at the connection between the fixing seat 72 and the fixing beam 71, and increasing the stability of the connection between the fixing seat 72 and the fixing beam 71.

The outer wall of the fixing seat 72 abutting against the inner wall of the fixing groove 711 can also increase the contact area between the fixing seat 72 and the fixing beam 71 so as to increase the connection strength between the fixing seat 72 and the side wall of the fixing groove 711, and also enables the force received at the joint between the fixing seat 72 and the fixing beam 71 to be more dispersed so as to reduce force concentration at a certain position where the fixing seat 72 is connected to the fixing beam 71.

The embodiment further provide some ways of connecting the fixing seat 72 to the fixing beam 71. Providing the fixing groove 711 on the fixing beam 71, and housing the fixing seat 72 in the fixing groove 711 enable the inside of the fixing groove 711 to be connected to the fixing seat 72 from multiple directions, so as to increase the contact area between the fixing seat 72 and the fixing beam 71, so that the force can be more uniformly transmitted to the fixing seat 72, the situation that the force received at the connection between the fixing seat 72 and the fixing beam 71 is concentrated at a certain point is reduced, and thus the connection strength between the fixing seat 72 and the fixing beam 71 is increased.

Referring to FIG. 4, in some embodiments, in the height direction of the fixing beam 71, the size of the fixing groove 711 is less than the size of the fixing beam 71.

The height direction of the fixing beam 71 is the direction in which the Z axis is located in the figure. The size of the fixing beam 71 in the height direction thereof refers to the size of the fixing beam 71 in the Z axis direction. The size of the fixing groove 711 in the height direction of the fixing beam 71 refers to the size of the fixing groove 711 in the Z-axis direction. The size of the fixing seat 72 in the height direction of the fixing beam 71 refers to the size of the fixing seat 72 in the Z-axis direction.

The size of the fixing groove 711 in the height direction of the fixing beam 71 is less than the size of the fixing beam 71, so that the size of the fixing seat 72 in the height direction of the fixing beam 71 is also less than the size of the fixing beam 71, that is, the length of the fixing seat 72 should not be too long.

Since the force applied by the limiting member 73 to the fixing seat 72 points from the outside to the direction in which the accommodating groove 74 is located when the fixing beam 71 is subjected to the expansion force of the battery cell 30, and since the limiting member 73 is connected to one end of the fixing seat 72, a lever force pointing from the inside of the accommodating groove 74 to the outside is easily formed at one end of the fixing seat 72 away from the limiting member 73 . The direction of the lever force is consistent with the direction of the expansion force of the battery cell 30, which easily has a negative influence on the connection stability between the fixing seat 72 and the fixing beam 71, easily leads to the connection failure between the fixing seat 72 and the fixing beam 71, and thus easily causes one end of the fixing seat 72 away from the limiting member 73 to tilt up. Also allowing the size of the fixing seat 72 in the height direction of the fixing beam 71 to be less than the size of the fixing beam 71 can reduce the negative influence of the lever force on the connection stability between the fixing seat 72 and the fixing beam 71, thereby enhancing the connection strength between the fixing seat 72 and the fixing beam 71.

Meanwhile, it can be understood that the size of the fixing seat 72 in the height direction of the fixing beam 71 should not be too short, so that the fixing seat 72 can be in sufficient contact with the fixing beam 71 to enable the fixing seat 72 and the fixing beam 71 to have a strong connection strength therebetween.

In the embodiment, allowing the size of the fixing groove 711 in the height direction of the fixing beam 71 to be less than the size of the fixing beam 71 also enables the size of the fixing seat 72 in the height direction of the fixing beam 71 to be less than the size of the fixing beam 71, so as to reduce the negative influence of the lever force generated on the fixing seat 72 by the limiting member 73 on the connection stability between the fixing seat 72 and the fixing beam 71, thereby enhancing the connection strength between the fixing seat 72 and the fixing beam 71.

Referring to FIGS. 4, 5, and 6, in some embodiments, in a thickness direction of the fixing beam 71, the width of the fixing groove 711 gradually increases, and the width of the fixing seat 72 also gradually increases.

In FIG. 4, the thickness direction of the fixing beam 71 is the direction in which the X axis is located, and the thickness direction of the fixing beam 71 is also the direction in which the expansion force of the battery cell 30 is located. The width direction of the fixing groove 711 is the direction in which the Y axis is located, the width of the fixing groove 711 is the size of the fixing groove 711 in the Y axis direction, and the width of the fixing seat 72 is the size of the fixing seat 72 in the Y axis direction.

Since the width of the fixing groove 711 gradually increases, the fixing groove 711 may be a triangular groove, a trapezoidal groove, or a gradually expanding groove of other shapes. Since the width of the fixing seat 72 gradually increases, the fixing seat 72 may be in a shape of a triangular prism, a trapezoidal quadrangular prism, or in other shapes.

The width of the fixing groove 711 gradually increases, and accordingly, an inner side wall of the fixing groove 711 may be a continuous surface inclined relative to the X axis direction, or may be of a stair-like structure or other structures. Similar to the fixing groove 711, an outer side wall of the fixing seat 72 may be a continuous surface inclined relative to the X axis direction, or may be of a stair-like structure or other structures.

Compared with the inner side wall of the fixing groove 711 being parallel to the X axis, this setting can increase the contact area between the fixing seat 72 and the inner wall of the fixing groove 711, so that the fixing seat 72 can be in more sufficient contact with the fixing beam 71, and the fixing seat 72 and the fixing beam 71 have a stronger connection strength therebetween. At the same time, this setting also enables the force received at the connection between the fixing seat 72 and the inner side wall of the fixing groove 711 to be dispersed to other positions of the fixing beam 71, which can reduce the force received at the connection between the fixing seat 72 and the inner side wall of the fixing groove 711, and can also reduce the concentration of the force, so as to achieve the effect of enhancing the connection strength between the fixing seat 72 and the inner side wall of the fixing groove 711.

In the embodiment, setting the fixing groove 711 in a shape that gradually expands in a direction away from the fixing groove 711, and gradually increasing the width of the fixing seat 72 enable the shape of the fixing seat 72 to adapt to the shape of the fixing groove 711. This setting can further increase the contact area between the fixing seat 72 and the fixing beam 71, thereby further increasing the strength at the connection between the fixing seat 72 and the fixing beam 71. Meanwhile, this setting also enables both the inner side wall of the fixing groove 711 and the outer side wall of the fixing seat 72 to be inclined relative to the direction of the expansion force. Since the fixing beam 71 will have a trend to deform in the direction away from the accommodating groove 74 when subjected to the expansion force of the battery cell 30, this setting enables the expansion force received at the connection between the fixing seat 72 and the fixing beam 71 to form a component force perpendicular to the inner side wall of the fixing groove 711 as a tensile force and also form a component force along the inner side wall of the fixing groove 711 as a shear force so as to reduce the occurrence of easy breakage at the connection between the fixing seat 72 and the fixing groove 711 caused by only a single force, thereby further increasing the strength at the connection between the fixing seat 72 and the fixing beam 71.

Referring to FIGS. 5 and 6, in some embodiments, the fixing seat 72 is in a shape of a triangular prism, a trapezoidal quadrangular prism, or a semi-cylinder.

When the fixing seat 72 is a triangular prism, the bottom surface of the triangular prism faces the bottom wall of the housing 300, and the tip of the triangular prism faces the accommodating groove 74.

When the fixing seat 72 is a trapezoidal quadrangular prism, the bottom surface of the trapezoidal quadrangular prism faces the bottom wall of the housing 300, and a plane of the trapezoidal quadrangular prism with a smaller area faces the accommodating groove 74.

When the fixing seat 72 is a semi-cylinder, the bottom surface of the semi-cylinder faces the bottom wall of the housing 300, and the arc surface of the semi-cylinder faces the accommodating groove 74.

Setting the fixing seat 72 in a shape of a triangular prism, a trapezoidal quadrangular prism, or a semi-cylinder enables the fixing seat 72 to disperse part of the received force to the fixing beam 71 to reduce the force received at the connection between the fixing seat 72 and the fixing beam 71, thereby increasing the strength at the connection between the fixing seat 72 and the fixing beam 71. At the same time, as an upper edge of the side wall of the fixing seat 72 connected to the fixing beam 71 reduces, the stress concentration at the joint between the fixing seat 72 and the fixing beam 71 can also reduce, thereby further increasing the strength at the connection between the fixing seat 72 and the fixing beam 71.

The embodiment further provides some specific structures of the fixing seat 72 to increase the contact area between the fixing seat 72 and the fixing beam 71, thereby further increasing the strength at the connection between the fixing seat 72 and the fixing beam 71. At the same time, the force received at the connection between the fixing seat 72 and the fixing beam 71 can also be better dispersed and transmitted to the inside of the fixing beam 71, thereby further increasing the strength at the connection between the fixing seat 72 and the fixing beam 71.

Referring to FIGS. 5 and 6, in some embodiments, the fixing seat 72 is provided with a weight-reducing groove 722.

The function of the weight-reducing groove 722 is to reduce the weight of the fixing seat 72. Accordingly, the weight-reducing groove 722 may be disposed on the top surface or the bottom surface of the fixing seat 72, and the weight-reducing groove 722 should not be disposed on the surface of the fixing seat 72 connected to the fixing beam 71, so as to reduce the negative influence of the weight-reducing groove 722 on the connection strength between the fixing seat 72 and the fixing beam 71. The weight-reducing groove 722 may penetrate through the fixing seat 72, or may extend into the fixing seat 72. The weight-reducing groove 722 may be a square groove, a circular groove, or a groove of other shapes. One, two, or more weight-reducing grooves 722 may be provided.

In the embodiment, providing the weight-reducing groove 722 on the fixing seat 72 can reduce the weight of the fixing seat 72, thereby reducing the negative influence of the setting of the fixing seat 72 on the overall weight of the housing 300.

According to some embodiments of the present application, referring to FIG. 4, FIG. 4 is a schematic perspective diagram of the first housing 70 of the housing 300 provided according to some embodiments of the present application.

In some embodiments of the present application, at least two fixing seats 72 are spaced apart on the fixing beam 71 in the length direction of the fixing beam 71. Specifically, two, three, four, or more fixing seats 72 may be provided, and correspondingly, the number of the limiting members 73 also increases.

Limited by the material strength, the connection strength at the connection between the fixing seat 72 and the fixing beam 71, etc., the suppression of the expansion force of the battery cell 30 by the structure of each fixing seat 72 and limiting member 73 can be limited. Therefore, a plurality of fixing seats 72 are provided to better enhance the force bearing capacity of the structure of the fixing seat 72 and the limiting member 73, thereby better suppressing the deformation of the fixing beam 71.

In the embodiment, providing a plurality of fixing seats 72 on the fixing beam 71 enables the fixing seat 72 and the limiting member 73 to better transmit the expansion force of the battery cell 30 received by the fixing beam 71, thereby better achieving the effect of suppressing the deformation of the fixing beam 71.

According to some embodiments of the present application, the fixing seat 72 is made of the same material as the fixing beam 71. For example, the fixing seat 72 and the fixing beam 71 may both be made of aluminum or aluminum alloy. For another example, the fixing seat 72 and the fixing beam 71 may also be made of steel. It can be understood that the fixing seat 72 and the fixing beam 71 may also be made of other materials, which are not limited to aluminum, aluminum alloy, steel, and other materials.

This setting can facilitate the welding of the fixing seat 72 and the fixing beam 71, and can also facilitate the transmission of the force between the fixing seat 72 and the fixing beam 71.

Since the fixing seat 72 is made of the same material as the fixing beam 71, the fixing seat 72 and the fixing beam 71 can also have the same or similar deformation trend. If the deformation trends of the fixing seat 72 and the fixing beam 71 are different, then it may lead to a trend of the relative displacement of the fixing seat 72 and the fixing beam 71 and the formation of an internal force, which in turn easily causes the connection between the fixing seat 72 and the fixing beam 71 to bear an additional force in addition to the expansion force of the battery cell 30. Thus, allowing the fixing seat 72 and the fixing beam 71 to be made of the same material can also reduce the occurrence of an additional force at the connection between the fixing seat 72 and the fixing beam 71 due to different deformation trends, thereby achieving the effect of enhancing the connection strength between the fixing seat 72 and the fixing beam 71.

If the fixing seat 72 is made of a different material from the fixing beam 71, it is easy for either one of the fixing seat 72 and the fixing beam 71 to break or fail first, and at this time, the other one of the fixing seat 72 and the fixing beam 71 still does not reach the structural limit, which easily leads to insufficient utilization of the structure. Accordingly, allowing the fixing seat 72 and the fixing beam 71 to be made of the same material also enables a full use of the structure, thereby reducing the occurrence of one of the fixing seat 72 and the fixing beam 71 failing first.

In the embodiment, allowing the fixing seat 72 and the fixing beam 71 to be made of the same material enables the expansion force of the battery cell 30 to be more uniformly distributed between the fixing seat 72 and the fixing beam 71, and enables the occurrence of the fixing seat 72 or the fixing beam 71 breaking and failing first to be reduced.

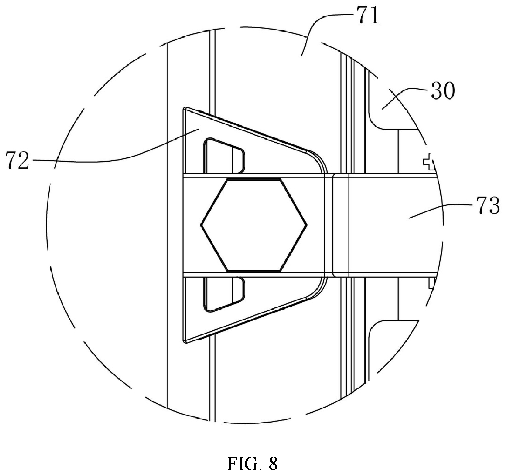

According to some embodiments of the present application, referring to FIGS. 5-8, FIG. 5 is a partially enlarged schematic diagram of A in FIG. 4, FIG. 6 is a schematic diagram of an exploded structure of the fixing beam 71 and the fixing seat 72 in FIG. 5, FIG. 7 is a schematic top view of the battery 200 after the second housing 80 is removed provided according to some embodiments of the present application, and FIG. 8 is a partially enlarged schematic diagram of B in FIG. 7.

In some embodiments of the present application, the limiting member 73 is detachably connected to the corresponding fixing seat 72, and the detachable connection method may be a bolt connection method, a snap connection method, or other detachable connection methods.

Detachably connecting the limiting member 73 to the fixing seat 72 can facilitate the installation, disassembly, and replacement of the limiting member 73.

Detachably connecting the limiting member 73 to the fixing seat 72 can also facilitate a worker to apply a pre-tightening force to a limiting frame before the limiting member 73 is mounted. For example, the worker may first apply a pulling force to two ends of the limiting member 73, and then respectively mount the two ends of the limiting member 73 on two corresponding fixing seats 72, at which point after the limiting member 73 is mounted, a restoring force of the limiting member 73 can apply, to the fixing seat 72, a force from the outside to the inside of the accommodating groove 74, thereby better playing a role of suppressing the deformation of the fixing beam 71.

In the embodiment, detachably connecting the limiting member 73 to the fixing seat 72 facilitates the installation, disassembly, and replacement of the limiting member 73, and also facilitates the application of a pre-tightening force on the limiting member 73 in advance, so that the limiting member 73 can better suppress the deformation of the fixing beam 71 by the pre-tightening force.

According to some embodiments of the present application, referring to FIGS. 2 and 4, FIG. 2 is a schematic diagram of an exploded structure of the battery 200 provided according to some embodiments of the present application, and FIG. 4 is a schematic perspective diagram of the first housing 70 of the housing 300 provided according to some embodiments of the present application.

In some embodiments of the present application, the housing 300 further comprises a first housing 70. At least one fixing beam 71 constitutes a frame of the first housing 70, or each fixing beam 71 is located inside the first housing 70.

The first housing 70 refers to a part of the housing 300. The first housing 70 may independently define an accommodating space for accommodating the battery cell 30, or may cooperate with other structures to jointly define the accommodating space for accommodating the battery cell 30. In addition to providing a mounting basis for the battery cell 30, the first housing 70 can also provide a fixing basis for the fixing beam 71, the limiting member 73, or other structures.

The housing 70 may be made of metal, plastic, or other materials. The first housing 70 may be in a shape of a cuboid, a cylinder, or in other shapes.

The fixing beam 71 may be used as a member inside the first housing 70 to enhance the strength of the first housing 70 and provide a fixing basis for the fixing seat 72. The fixing beam 71 may also be used as the frame of the first housing 70 to reduce the occupation of the internal space of the first housing 70 by the fixing beam 71.

The embodiment provides some setting methods of the fixing beam 71. Allowing the fixing beam 71 to be a structural member inside the housing 300 also enables the fixing beam 71 to play a role of increasing the strength of the housing 300. At the same time, further allowing the fixing beam 71 to be used as the frame of the housing 300 reduces the occupation of the internal space of the housing 300 by the fixing beam 71.

Referring to FIGS. 5 and 6, in some embodiments, the limiting member 73 is fixed to the fixing seat 72 via a bolt. Specifically, the fixing seat 72 is provided with a threaded hole 721, and the limiting member 73 is provided with a through hole. When the limiting member 73 is mounted, the through hole of the limiting member 73 is opposed to the threaded hole 721 of the fixing seat 72, and then the bolt passes through the through hole and is threadedly fitted into the threaded hole 721.

According to some embodiments of the present application, three fixing beams 71 are evenly spaced apart in the first housing 70, two fixing seats 72 are spaced apart on each fixing beam 71, and two ends of the limiting member 73 are respectively connected to the fixing seats 72 of two adjacent fixing beams 71.

In some other embodiments, three fixing beams 71 are evenly spaced apart in the first housing 70, and no fixing seats 72 are provided on the middle fixing beam 71. Three fixing seats 72 are provided on the fixing beams 71 at two ends, and two ends of the limiting member 73 are respectively connected to the fixing seats 72 of the fixing beams 71 at two ends.

In still other embodiments, two fixing beams 71 are spaced apart in the first housing 70, four fixing seats 72 are spaced apart on each fixing beam 71, and two ends of the limiting member 73 are respectively connected to the fixing seats 72 on the two fixing beams 71.

Referring to FIGS. 2 and 3, in some embodiments, the battery 200 further comprises a battery cell 30 which is disposed between two fixing beams 71. The battery cell 30 comprises two first surfaces 301 which are oppositely disposed and two second surfaces 302 which are oppositely disposed. The first surface 301 is adjacent to the second surface 302, and the area of the first surface 301 is greater than the area of the second surface 302. The first surface 301 faces the fixing beam 71.

The first surface 301 and the second surface 302 of the battery cell 30 both refer to the outer surfaces of the casing body 33 thereof, wherein the first surface 301 is adjacent to the second surface 302, and the area of the first surface 301 is greater than the area of the second surface 302.

When the battery cell 30 is assembled in the first housing 70, the first surface 301 of the battery cell 30 is allowed to face the fixing beam 71, that is, the surface of the battery cell 30 with a larger area is allowed to face the fixing beam 71. Since a degree of expansion deformation of the first surface 301 is greater when the battery cell 30 expands, allowing the first surface 301 to be opposite to the fixing beam 71 can better suppress the deformation of the battery cell 30 by means of the fixing beam 71, so as to reduce the occurrence of cracking of the casing body 33 due to the excessive expansion of the battery cell 30, breakage of a connecting aluminum busbar, and the like.

In the embodiment, the first surface 301 of the battery cell 30 with a larger area is allowed to be opposite to the fixing beam 71. Since a degree of deformation of the first surface 301 with a larger area is generally larger, allowing the first surface 301 to be opposite to the fixing beam 71 can better suppress the expansion of the battery cell 30 by means of the fixing beam 71.

Referring to FIG. 3, in some embodiments, the battery cell 30 further comprises a pressure relief mechanism 34, and the limiting member 73 and the pressure relief mechanism 34 are alternately disposed.

The pressure relief mechanism 34 may be disposed on the end cap 31, and is used for relieving an internal pressure when the internal pressure or temperature of the battery cell 30 reaches a threshold. The pressure relief mechanism 34 may be an explosion-proof valve, or may be a pressure relief valve, a bursting cap, a fusible plug, or other devices having a pressure relief function. In some embodiments, the pressure relief mechanism 34 is an explosion-proof valve, and when the air pressure inside the casing body 33 is greater than the pressure relief threshold, the explosion-proof valve can be opened and the gas in the casing body 33 can be discharged to the outside. The pressure relief threshold can be set according to the number, density, arrangement, etc. of the electrode assemblies 32 in the battery cell 30, and according to the volume, material, etc. of the casing body 33. In some embodiments, the pressure relief mechanism 34 may also be disposed on any end surface of the casing body 33, and is not limited to being disposed on the end cap 31.

According to the function of the pressure relief mechanism 34, in the embodiment, alternately disposing the limiting member 73 and the pressure relief mechanism 34 reduces the occurrence of the limiting member 73 covering the pressure relief mechanism 34 and hindering the exhaust of the pressure relief mechanism 34, thereby reducing the negative influence of the limiting member 73 on the exhaust of the battery cell 30.

In a second aspect, some embodiments of the present application further provide an electrical device 100, comprising the battery 200 provided according to some embodiments in the first aspect.

The electrical device 100 can be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

The above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some of the technical features; and these modifications or replacements do not make the essence of the corresponding technical solutions depart from the spirit and scope of the technical solutions of the various embodiments of the present application, and should be included within the scope of protection of the present application.

## Claims

1. A battery, comprising:
a housing, which is configured to accommodate a battery cell;
at least two fixing beams, wherein the at least two fixing beams are spaced apart in the housing, a space for accommodating the battery cell being formed between two adjacent fixing beams;
a fixing seat arranged on the fixing beam; and
a limiting member, which is connected to the fixing seats on different fixing beams.

2. The battery according to claim 1, wherein an accommodating groove can be formed between any two fixing beams, the battery cell is located in the accommodating groove, and the fixing seat is arranged on one side of the fixing beam facing away from the accommodating groove.

3. The battery according to claim 1, wherein the fixing beam is provided with a fixing groove, the fixing seat is housed in the fixing groove, and the fixing seat abuts against an inner wall of the fixing groove.

4. The battery according to claim 3, wherein in a height direction of the fixing beam, the size of the fixing groove is less than the size of the fixing beam.

5. The battery according to claim 3, wherein in a thickness direction of the fixing beam, the width of the fixing groove gradually increases, and the width of the fixing seat also gradually increases.

6. The battery according to claim 5, wherein the fixing seat is in a shape of a triangular prism, a trapezoidal quadrangular prism, or a semi-cylinder.

7. The battery according to any one of claims 1-6, wherein the fixing seat is provided with a weight-reducing groove.

8. The battery according to any one of claims 1-7, wherein at least two fixing seats are spaced apart on the fixing beam in a length direction of the fixing beam.

9. The battery according to any one of claims 1-8, wherein the fixing seat is made of the same material as the fixing beam.

10. The battery according to any one of claims 1-9, wherein the limiting member is detachably connected to a corresponding fixing seat.

11. The battery according to any one of claims 1-10, wherein the housing further comprises a first housing; and
at least one fixing beam constitutes a frame of the first housing, or each fixing beam is located inside the first housing.

12. The battery according to any one of claims 1-11, further comprising a battery cell which is disposed between two adjacent fixing beams;
a side surface of the battery cell comprises two first surfaces that are oppositely disposed and two second surfaces that are oppositely disposed, the first surface is adjacent to the second surface, and the area of the first surface is greater than the area of the second surface; and
the first surface faces the fixing beam.

13. The battery according to any one of claims 1-12, wherein the battery cell further comprises a pressure relief mechanism, and the limiting member and the pressure relief mechanism are disposed alternately.

14. An electrical device, comprising the battery according to any one of claims 1-13.
